(19) **Europäisches Patentamt / European Patent Office / Office européen des brevets**

(11) **EP 2 884 458 A1**

(12) **EUROPEAN PATENT APPLICATION**
published in accordance with Art. 153(4) EPC

(43) Date of publication:
**17.06.2015 Bulletin 2015/25**

(51) Int Cl.:
**G06T 7/00** (2006.01)

(21) Application number: **13827520.1**

(22) Date of filing: **18.07.2013**

(86) International application number:
**PCT/JP2013/069510**

(87) International publication number:
**WO 2014/024655 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2012 JP 2012177006**

(71) Applicant: **Konica Minolta, Inc.
Tokyo 100-7015 (JP)**

(72) Inventor: **HORITA, Shinichi
Tokyo 100-7015 (JP)**

(74) Representative: **Hoffmann Eitle
Patent- und Rechtsanwälte PartmbB
Arabellastraße 30
81925 München (DE)**

(54) **IMAGE PROCESSING DEVICE, IMAGE PROCESSING METHOD, AND IMAGE PROCESSING PROGRAM**

(57) An image processing apparatus for generating a template image used for template matching relying on a frequency component of an image is provided. The image processing apparatus includes a setting portion accepting setting of a region in an input image as a template candidate image and an effectiveness degree calculation portion calculating, by analyzing the template candidate image itself set in the input image, a degree of effectiveness indicating appropriateness as the template image of the template candidate image. The effectiveness degree calculation portion calculates the degree of effectiveness based on a value associated with frequency distribution of the template candidate image.

FIG.4

EP 2 884 458 A1

**Description**

TECHNICAL FIELD

The present invention relates to an image processing apparatus, an image processing method, and an image processing program for generating a template image used for template matching.

BACKGROUND ART

Various techniques for image matching processing have conventionally been proposed. Such matching processing is represented by template matching in which matching between a template image prepared in advance and an image to be processed is carried out. Such template matching is applied, for example, to inspection of defective products on a production line. In order to enhance matching accuracy in template matching, a template image is very important.

For example, according to an approach disclosed in Japanese Laid-Open Patent Publication No. 2001-148014 (PTD 1), distribution of correlation values (variance and standard deviation) calculated in correspondence with a coordinate of an image plane is compared with a plurality of image patterns which can be template images, and a most unique pattern is automatically determined.

CITATION LIST

PATENT DOCUMENT

PTD 1: Japanese Laid-Open Patent Publication No. 2001-148014

SUMMARY OF INVENTION

TECHNICAL PROBLEM

In the approach disclosed in PTD 1 above, however, results of actual template matching are used in evaluation of template images, and calculation for matching processing has been costly. For example, in template matching relying on a frequency component of an image such as phase only correlation (hereinafter also denoted as "POC") or phase shift analysis (hereinafter also denoted as "PSA"), it is not easy to generate an appropriate template image. In general, template images are generated by clipping of a region including a subject (an object) as a template image from a photographed image by a user. In this case, a template image which is not appropriate for matching processing relying on a frequency component (that is, in a frequency space) although it appears to be effective as a template image for human eyes, such as a repeated pattern, may be set.

An object of the present invention is to provide an image processing apparatus, an image processing method, and an image processing program capable of appropriately and readily generating a template image used for template matching relying on a frequency component of an image.

SOLUTION TO PROBLEM

According to an embodiment of the present invention, an image processing apparatus for generating a template image used for template matching relying on a frequency component of an image is provided. The image processing apparatus includes a setting portion that accepts setting of a region in an input image as a template candidate image and an effectiveness degree calculation portion that calculates, by analyzing the template candidate image itself set in the input image, a degree of effectiveness indicating appropriateness as the template image. The effectiveness degree calculation portion calculates the degree of effectiveness based on a value associated with frequency distribution of the template candidate image.

Preferably, the effectiveness degree calculation portion includes a frequency conversion portion that subjects the template candidate image to frequency conversion and a frequency effectiveness degree calculation portion that calculates frequency effectiveness degrees of individual frequencies at an output of the frequency conversion portion, and outputs a value obtained by summing the frequency effectiveness degrees of the individual frequencies calculated by the frequency effectiveness degree calculation portion, as the degree of effectiveness.

Further preferably, the frequency effectiveness degree calculation portion calculates the frequency effectiveness degree from amplitude at each frequency included in the template candidate image.

Further preferably, the frequency effectiveness degree calculation portion regards, when amplitude at each frequency is lower than a prescribed value, the frequency effectiveness degree for that frequency as zero.

Further preferably, the frequency effectiveness degree calculation portion regards the frequency effectiveness degree for a frequency higher than a prescribed value as zero.

Further preferably, the frequency effectiveness degree calculation portion regards the frequency effectiveness degree for a frequency lower than a prescribed value as zero.

Further preferably, the frequency effectiveness degree calculation portion regards, when a value for a DC component of a spatial frequency characteristic of a camera which has photographed the input image is defined as a reference and a value for the spatial frequency characteristic at a frequency of interest is lower than a prescribed ratio, the frequency effectiveness degree for that frequency of interest as zero.

Preferably, the effectiveness degree calculation portion outputs the degree of effectiveness indicating a value higher as diversity in a direction of distribution of frequency components included in the template candidate image is higher.

Further preferably, the effectiveness degree calculation portion includes a frequency conversion portion that subjects the template candidate image to frequency conversion, a frequency effectiveness degree calculation portion that calculates a frequency effectiveness degree for an individual frequency at an output of the frequency conversion portion, and a polar coordinate conversion portion that subjects the frequency effectiveness degree calculated by the frequency effectiveness degree calculation portion to polar coordinate conversion.

Preferably, the effectiveness degree calculation portion outputs as the degree of effectiveness, the number of pixels within the template candidate image, of which magnitude of an image gradient is greater than a prescribed value.

Further preferably, the effectiveness degree calculation portion corrects the degree of effectiveness based on magnitude of diversity in a direction of an image gradient vector within the template candidate image.

Preferably, the effectiveness degree calculation portion includes an edge detection portion that detects an edge within the template candidate image and a portion that calculates the degree of effectiveness based on an amount of edge detected by the edge detection portion.

Further preferably, the degree of effectiveness is calculated based on a total length of the detected edge.

Further preferably, the degree of effectiveness is calculated based on the number of detected edges.

Preferably, the image processing apparatus further includes a display portion that displays the degree of effectiveness calculated by the effectiveness degree calculation portion.

Preferably, the setting portion sets a plurality of template candidate images different in region from one another based on an input from a user, the effectiveness degree calculation portion calculates the degree of effectiveness for each of the plurality of template candidate images, and the image processing apparatus further includes a determination portion that determines a template candidate image highest in degree of effectiveness as the template image.

According to another embodiment of the present invention, an image processing method for generating a template image used for template matching relying on a frequency component of an image is provided. The image processing method includes the steps of accepting setting of a region in an input image as a template candidate image and calculating, by analyzing the template candidate image itself set in the input image, a degree of effectiveness indicating appropriateness as the template image. The degree of effectiveness is calculated based on a value associated with frequency distribution of the template candidate image.

According to yet another embodiment of the present invention, an image processing program for generating a template image used for template matching relying on a frequency component of an image is provided. The image processing program causes a computer to perform the steps of accepting setting of a region in an input image as a template candidate image and calculating, by analyzing the template candidate image itself set in the input image, a degree of effectiveness indicating appropriateness as the template image. The degree of effectiveness is calculated based on a value associated with frequency distribution of the template candidate image.

ADVANTAGEOUS EFFECTS OF INVENTION

According to the present invention, a template image used for template matching relying on a frequency component of an image can appropriately and readily be generated.

BRIEF DESCRIPTION OF DRAWINGS

Fig. 1 is a schematic diagram showing an application of template matching according to an embodiment of the present invention.

Fig. 2 is a block diagram showing a configuration when an image processing apparatus according to the embodiment of the present invention is implemented by a personal computer.

Fig. 3 is a block diagram in connection with template matching according to the embodiment of the present invention.

Fig. 4 is a block diagram in connection with processing for calculating a template effectiveness degree according to the embodiment of the present invention.

Fig. 5 is a flowchart showing a procedure for generating a template image according to the embodiment of the present invention.

Fig. 6 is a flowchart showing another procedure for generating a template image according to the embodiment of the present invention.

Fig. 7 is a block diagram showing a further detailed functional configuration of a template effectiveness degree calculation portion (Fig. 4) according to a first embodiment of the present invention.

Fig. 8 is a diagram for illustrating processing in a frequency effectiveness degree calculation portion according to the first embodiment of the present invention.

Fig. 9 is a block diagram showing a further detailed functional configuration of the template effectiveness degree calculation portion (Fig. 4) according to a second embodiment of the present invention.

Fig. 10 is a diagram for illustrating processing for calculating a template effectiveness degree according to the second embodiment of the present invention.

Fig. 11 is a block diagram showing a further detailed functional configuration of the template effectiveness degree calculation portion (Fig. 4) according to a third embodiment of the present invention.

Fig. 12 is a block diagram showing a further detailed functional configuration of the template effectiveness degree calculation portion (Fig. 4) according to a fourth embodiment of the present invention.

Fig. 13 is a diagram for illustrating edge extraction processing according to the fourth embodiment of the present invention.

DESCRIPTION OF EMBODIMENTS

An embodiment of the present invention will be described in detail with reference to the drawings. The same or corresponding elements in the drawings have the same reference characters allotted and description thereof will not be repeated.

[A. Overview]

The present embodiment is directed to an image processing apparatus and an image processing method for evaluating a template image used for template matching relying on a frequency component of an image. Typically, the image processing apparatus calculates a degree of effectiveness indicating appropriateness as a template image when a user sets a template image, and supports setting of a more effective template image by giving a result as feedback to the user.

[B. System Configuration]

A mount example of an image processing apparatus according to an embodiment of the present invention will initially be described.

«b1: Application»

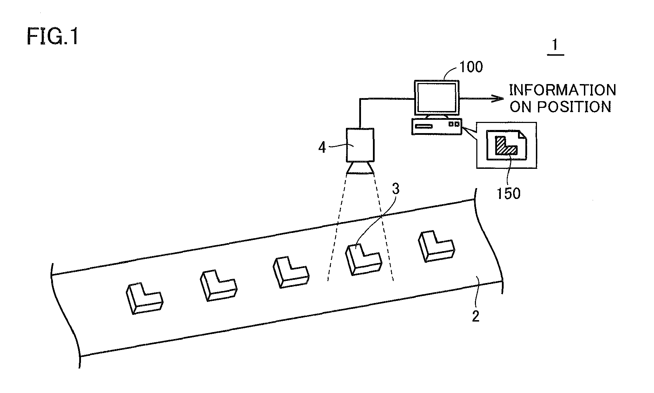

Fig. 1 is a schematic diagram showing an application of template matching according to the embodiment of the present invention. Referring to Fig. 1, a system 1 according to the present embodiment is applied to a production line including a belt conveyor 2 by way of example. In this system 1, objects 3 (workpieces) are successively transported over belt conveyor 2 and images including appearance of objects 3 (hereinafter also denoted as "photographed images") are obtained by photographing objects 3 with a camera 4.

The photographed image is transmitted to an image processing apparatus 100. Image processing apparatus 100 searches for a position of object 3 included in the photographed image based on a template image 150 stored in advance. Image processing apparatus 100 outputs information on a position which matches with the template image, which is obtained through this template matching.

Such a template image 150 is generally set as a user clips the photographed image. Image processing apparatus 100 evaluates a degree of effectiveness of an image clipped by the user and notifies the user of the degree of effectiveness, so as to support setting of more suitable template image 150.

«b2: Implementation with Personal Computer»

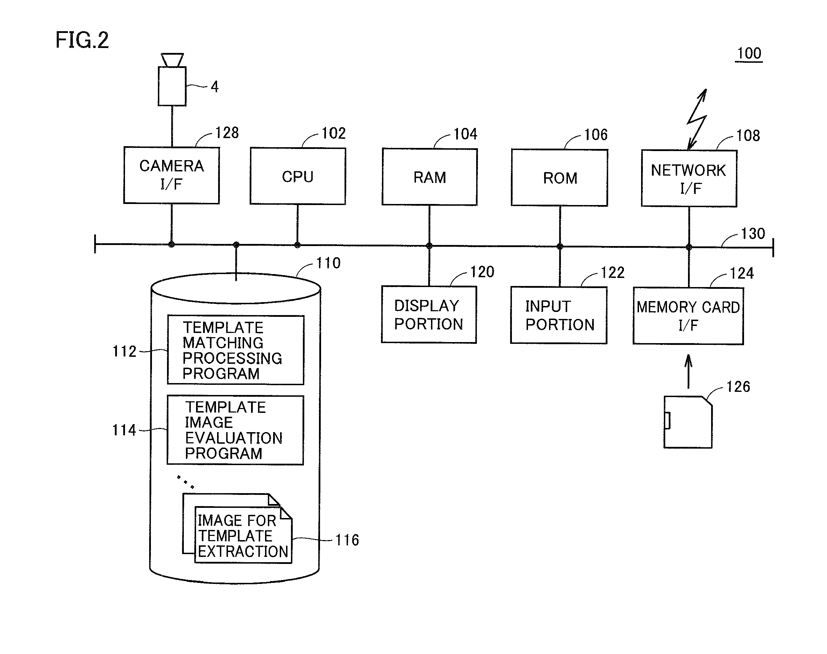

Fig. 2 is a block diagram showing a configuration when image processing apparatus 100 according to the embodiment of the present invention is implemented by a personal computer.

Referring to Fig. 2, image processing apparatus 100 implemented by a personal computer is mainly mounted on a computer having a general-purpose architecture. Referring to Fig. 2, image processing apparatus 100 includes, as main components, a CPU (Central Processing Unit) 102, a RAM (Random Access Memory) 104, a ROM (Read Only Memory) 106, a network interface (I/F) 108, an auxiliary storage device 110, a display portion 120, an input portion 122, a memory card interface (I/F) 124, and a camera interface (I/F) 128. The components are connected through a bus 130 so as to be able to communicate with one another.

CPU 102 executes an operating system (OS) or various programs such as a template matching processing program 112 and a template image evaluation program 114 stored in ROM 106 or auxiliary storage device 110. RAM 104 functions as a working memory for CPU 102 to execute a program, and primarily stores various types of data necessary for execution of a program. ROM 106 stores an initial program (a boot program) executed at the time of boot in image processing apparatus 100.

Network interface 108 exchanges data with other apparatuses (server apparatuses) through various communication media. More specifically, network interface 108 communicates data through wired circuits such as Ethernet® (LAN (Local Area Network) or WAN (Wide Area Network)) and/or wireless circuits such as wireless LAN.

Auxiliary storage device 110 is typically implemented by a large-capacity magnetic recording medium such as a hard disk, and stores an image processing program (template matching processing program 112 and template image evaluation program 114) for implementing various types of processing according to the present embodiment and an image for template extraction 116. Furthermore, auxiliary storage device 110 may store a program such as an operating system. Image for template extraction 116 is used for generating template image 150.

Display portion 120 displays an image generated as a result of execution of template matching processing program 112 and template image evaluation program 114, in addition to a GUI (Graphical User Interface) picture provided by an operating system.

Input portion 122 is typically implemented by a keyboard, a mouse, or a touch panel, and outputs contents of an instruction accepted from a user to CPU 102.

Memory card interface 124 reads and write data from and to various memory cards (non-volatile recording media) 126 such as an SD (Secure Digital) card or a CF (CompactFlash®) card.

Camera interface 128 takes in from camera 4, various images obtained by photographing a subject such as object 3. Camera 4 functions as an image obtaining portion for obtaining an image. A main body of image processing apparatus 100 does not have to have a function to photograph a subject. In this case, typically, necessary images are taken in through memory card 126 storing various images obtained with some apparatus. Namely, memory card 126 is attached to memory card interface 124, and various images read from memory card 126 are stored (copied) in auxiliary storage device 110.

Template matching processing program 112 and/or template image evaluation program 114 stored in auxiliary storage device 110 is/are distributed as being stored in such a recording medium as a CD-ROM (Compact Disk-Read Only Memory) or distributed from a server apparatus through a network. Template matching processing program 112 and/or template image evaluation program 114 may implement processing by invoking at prescribed timing and in a prescribed order, necessary modules among program modules provided as a part of an operating system executed in image processing apparatus 100 (a personal computer). In this case, template matching processing program 112 and/or template image evaluation program 114 itself/themselves does/do not contain a module provided by an operating system but implements image processing in cooperation with the operating system. Template matching processing program 112 and/or template image evaluation program 114 is/are not a stand-alone program but may be provided as being incorporated in a part of some program. In such a case as well, the program itself does not contain a module as made use of commonly to other programs, but implements image processing in cooperation with other programs. Even such a form not containing some modules does not depart from the spirit of image processing apparatus 100 according to the present embodiment.

Functions provided by template matching processing program 112 and/or template image evaluation program 114 may be implemented in part or in the entirety by dedicated hardware.

«b3: Implementation With Other Features»

In addition to the implementation with the personal computer described above, mount on a digital camera, a portable telephone, or a smartphone is applicable. In addition, a form like what is called cloud service in which at least one server apparatus performs the processing according to the present embodiment may be applicable. In this case, such a configuration that a user uses his/her own terminal (such as a personal computer or a smartphone) to transmit at least two images to be processed to a server apparatus (on a cloud side) and the server apparatus subjects the transmitted images to be processed to image processing according to the present embodiment is assumed. Furthermore, the server apparatus does not have to perform all functions (processing) but a terminal on a user side and a server apparatus may cooperate with each other to perform image processing according to the present embodiment.

[C. Template Matching]

Details of template matching according to the present embodiment will now be described. In the present embodiment, a configuration adopting POC as one example of template matching relying on a frequency component of an image will be exemplified.

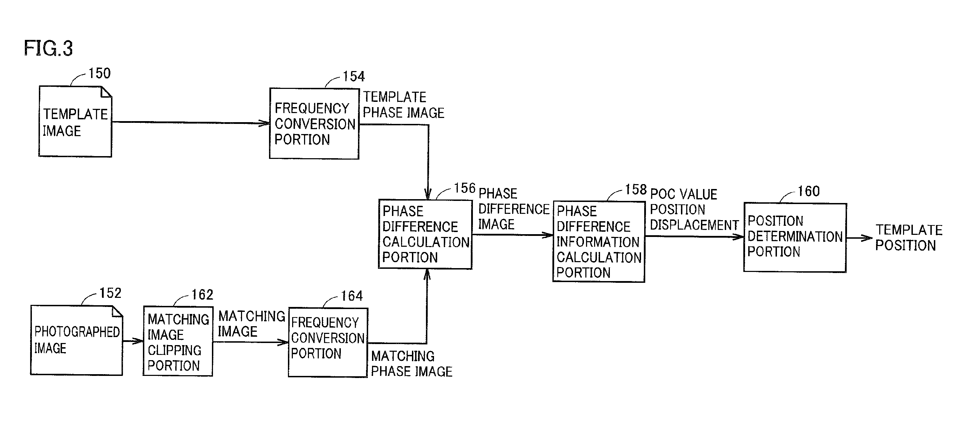

Fig. 3 is a block diagram in connection with template matching according to the embodiment of the present invention. Referring to Fig. 3, image processing apparatus 100 according to the present embodiment includes as a functional configuration in connection with template matching, frequency conversion portions 154 and 164, a matching image clipping portion 162, a phase difference calculation portion 156, a phase difference information calculation portion 158, and a position determination portion 160.

Such a functional configuration is implemented as CPU 102 executes template matching processing program 112 in image processing apparatus 100 shown in Fig. 2. Details of each functional configuration will be described below.

Template image 150 is generated in advance by a user and stored in auxiliary storage device 110. In a procedure for template matching, when a photographed image 152 is obtained through camera 4 and camera I/F 128, matching image clipping portion 162 clips a matching image to be subjected to template matching from photographed image 152. This matching image is an image as large as template image 150 and obtained by successively clipping an image in a prescribed region (a position) in photographed image 152. In the description below, a subject (object 3) to be detected by template image 150 is included in a matching image. When object 3 is not included in a matching image, processing is repeated between the matching image and a next matching image (different in position from the previous matching image).

Template image 150 and a matching image are each converted to a frequency space through Fourier transform, and a phase image corresponding thereto is calculated. Namely, frequency conversion portion 154 generates a template phase image from input template image 150 and frequency conversion portion 164 generates a matching phase image from the input matching image.

Then, a phase difference image is calculated from a difference between the two phase images. Namely, phase difference calculation portion 156 calculates a phase difference between the template phase image and the matching phase image and generates a phase difference image.

Furthermore, by subjecting the phase difference image to inverse Fourier transform, phase difference information is calculated and position displacement is calculated based on this phase difference information. Namely, phase difference information calculation portion 158 calculates a POC value by subjecting the input phase difference image to inverse Fourier transform. Then, phase difference information calculation portion 158 calculates position displacement between the matching image and template image 150, from a position on a frequency space at which the calculated POC value attains to a peak. Phase difference information calculation portion 158 outputs the calculated POC value and position displacement to position determination portion 160.

Position determination portion 160 evaluates the input POC value and corrects with the position displacement, a position on photographed image 152 from which the matching image has been clipped, so as to determine a position corresponding to template image 150 in photographed image 152, that is, a position corresponding to a subject (object 3) included in template image 150. Then, position determination portion 160 outputs information on a position of the template indicating a position corresponding to this template image 150.

[D. Processing for Calculating Degree of Effectiveness of Template Image 150]

Overview of processing for calculating a degree of effectiveness of template image 150 according to the present embodiment will now be described. In template matching relying on phase information on a frequency space such as POC described above, considering accuracy and stability of a result of matching, whether or not set template image 150 has appropriate frequency distribution in a frequency space is important. It is not easy for a user, however, to determine whether or not the template image has appropriate frequency distribution based on visual recognition. Then, in the present embodiment, a configuration allowing a user to readily determine whether or not appropriate template image 150 is obtained, by using a degree of effectiveness of template image 150 (hereinafter also denoted as a "template effectiveness degree"), is provided.

<<d1: Configuration Example>>

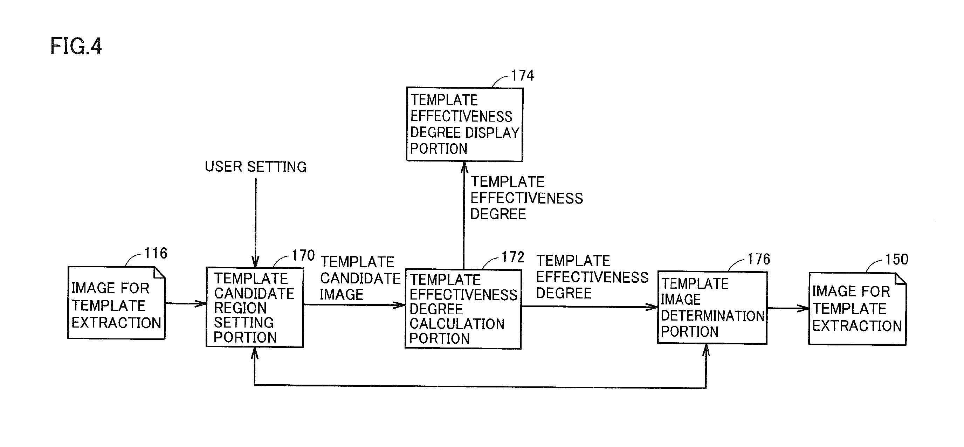

Fig. 4 is a block diagram in connection with processing for calculating a template effectiveness degree according to the embodiment of the present invention. Referring to Fig. 4, image processing apparatus 100 according to the present embodiment includes a template candidate region setting portion 170, a template effectiveness degree calculation portion 172, a template effectiveness degree display portion 174, and a template image determination portion 176 as a functional configuration in connection with processing for calculating a template effectiveness degree.

Such a functional configuration is implemented as CPU 102 executes template image evaluation program 114 in image processing apparatus 100 shown in Fig. 2. Details of each functional configuration will be described below.

Image for template extraction 116 is typically an image obtained by photographing a subject (object 3) with camera 4 (photographed image 152), and it is stored in advance in auxiliary storage device 110.

Template candidate region setting portion 170 sets a template candidate region to be clipped as template image 150 from image for template extraction 116. Namely, template candidate region setting portion 170 accepts setting of a region as a template image to be used for template matching, in image for template extraction 116 which is an input image. Typically, a user operates a mouse or a keyboard (input portion 122) to designate a position and an area in image for template extraction 116. Alternatively, a size of a region to be adopted as template image 150 may be determined in advance and then a mouse or a keyboard may be used to designate only a position in image for template extraction 116. Thus, template candidate region setting portion 170 sets one template candidate region or a plurality of template candidate regions in response to an operation by a user.

Template effectiveness degree calculation portion 172 calculates a degree of effectiveness representing appropriateness as template image 150 (a template effectiveness degree), of the template candidate image corresponding to the template candidate region set by template candidate region setting portion 170. Details of a method for calculating a template effectiveness degree will be described later. Only any one calculation method which will be described later may be adopted, or a plurality of calculation methods may be adopted and the methods may be integrated so as to provide an output as a final template effectiveness degree. Here, template effectiveness degree calculation portion 172 calculates a template effectiveness degree by analyzing a template candidate image itself, without performing processing for template matching.

Template effectiveness degree display portion 174 displays a template effectiveness degree calculated by template effectiveness degree calculation portion 172 in such a manner that the user readily understands. For example, a representation of a template effectiveness degree with a numeric value may be provided, a sign in accordance with magnitude of a template effectiveness degree (for example, a circle, a triangle, or a cross) and a numeric value representing a template effectiveness degree may together be displayed, or a graphic representation visualizing magnitude of a template effectiveness degree may be adopted.

When a user decides to adopt a certain template candidate image as template image 150, template image determination portion 176 outputs the template candidate image as template image 150. Specifically, template image determination portion 176 has the adopted template candidate image itself stored in auxiliary storage device 110 such that the adopted template candidate image can be made use of as template image 150 in subsequent template matching.

«d2: Procedure for Generating Template Image 150 (No. 1)»

A procedure for generating template image 150 according to the present embodiment will now be described.

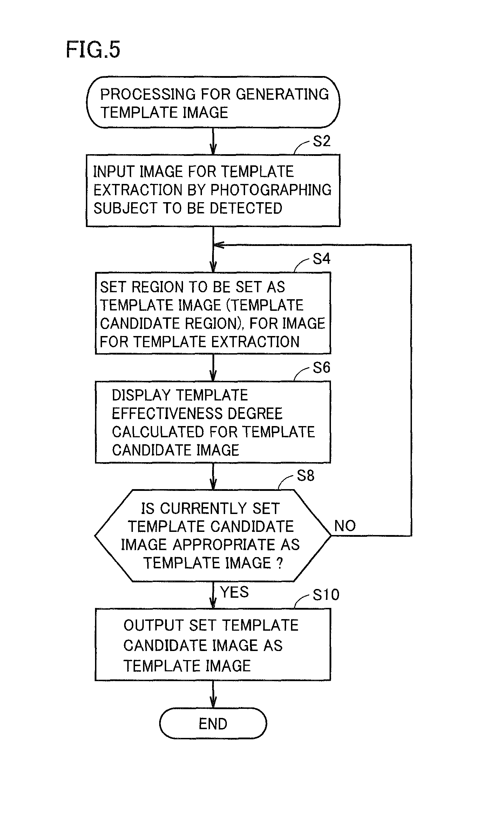

Fig. 5 is a flowchart showing a procedure for generating template image 150 according to the embodiment of the present invention. The processing procedure shown in Fig. 5 shows an example in which a user provides input or makes setting.

Referring to Fig. 5, initially, the user inputs image for template extraction 116 by photographing a subject (object 3) to be detected (step S2). This image for template extraction 116 is stored in auxiliary storage device 110 and displayed on display portion 120 (Fig. 2). In succession, the user sets a region to be set as template image 150 (a template candidate region), in image for template extraction 116 displayed on display portion 120 (step S4). In response to this operation, template candidate region setting portion 170 (Fig. 4) extracts a template candidate image set in image for template extraction 116.

In succession, a template effectiveness degree calculated for the template candidate image is displayed on display portion 120 (step S6). Namely, template effectiveness degree calculation portion 172 (Fig. 4) calculates appropriateness as template image 150 of the extracted template candidate image and template effectiveness degree display portion 174 (Fig. 4) notifies the user of a value obtained through calculation.

The user determines whether or not the currently set template candidate image is appropriate as template image 150 based on the displayed template effectiveness degree (step S8). When it is determined that the template candidate image is not appropriate as template image 150 (NO in step S8), the user sets again a region to be set as template image 150 (a template candidate region) (step S4). Namely, based on the displayed template effectiveness degree, the user modifies the template candidate region when a value for the degree of effectiveness is low. In contrast, based on the displayed template effectiveness degree, the currently set template candidate image is adopted as template image 150 when a value for the degree of effectiveness is sufficiently high. Namely, when it is determined that the template candidate image is appropriate as template image 150 (YES in step S8), the user gives an instruction that the currently set template candidate image be adopted as template image 150. Then, template image determination portion 176 outputs the template candidate image set at that time point as template image 150 and has the template candidate image stored in auxiliary storage device 110 (step S10). Then, processing for generating template image 150 ends.

«d3: Processing for Generating Template Image 150 (No. 2)»

Instead of the procedure for generating template image 150 as described above, from a point of view of higher user-friendliness, the following generation procedure may be adopted.

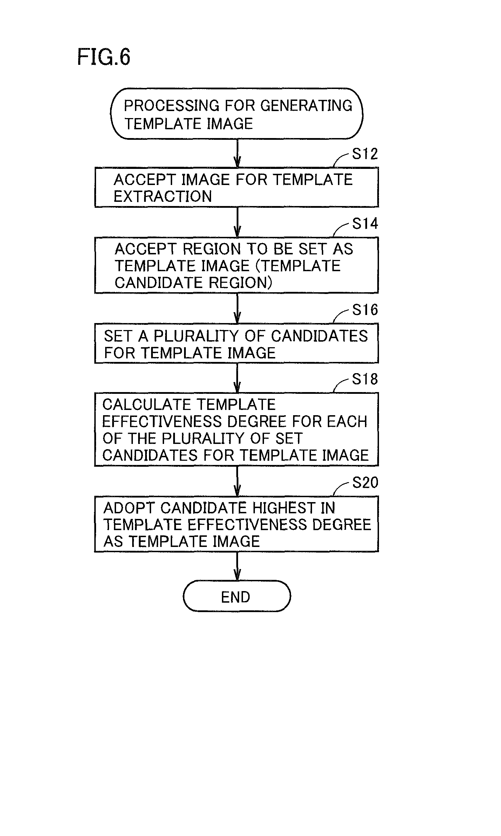

Fig. 6 is a flowchart showing another procedure for generating template image 150 according to the embodiment of the present invention. In the processing procedure shown in Fig. 6, when a user designates an area in image for template extraction 116 so as to include a subject to be detected, image processing apparatus 100 sets a plurality of candidates for template image 150 based on the designated area and calculates a template effectiveness degree for each candidate. Then, image processing apparatus 100 adopts a candidate highest in template effectiveness degree as template image 150.

More specifically, referring to Fig. 6, image processing apparatus 100 accepts image for template extraction 116 (step S12). This image for template extraction 116 is generated as the user photographs a subject to be detected. In succession, image processing apparatus 100 accepts a region to be set as a template image (a template candidate region) from the user (step S14) and sets a plurality of candidates for template image 150 (step S16). More specifically, when setting of a region to be set as template image 150 is received from the user, template candidate region setting portion 170 (Fig. 4) sets a plurality of candidates for template image 150, for the set region and the surroundings thereof. Namely, in response to region setting, template candidate region setting portion 170 sets a region which is set as image for template extraction 116 and a plurality of template candidate regions around the region. For example, with the set region being defined as the reference, a region covered by displacing N pixels in up, down, left, and right directions is set.

In succession, image processing apparatus 100 (template effectiveness degree calculation portion 172 in Fig. 4) calculates a template effectiveness degree for each of the plurality of set candidates for template image 150 (step S18). Namely, template effectiveness degree calculation portion 172 calculates a template effectiveness degree for each of the plurality of template candidate images corresponding to each set region.

Then, image processing apparatus 100 adopts a candidate highest in template effectiveness degree as template image 150 (step S20). Namely, template image determination portion 176 in Fig. 4 determines a template candidate image highest in template effectiveness degree as template image 150.

By adopting the generation procedure shown in Fig. 6, a template image high in template effectiveness degree can readily be obtained while burden imposed on the user is mitigated. Namely, according to the present scheme, around the region set as the template image, a plurality of regions are further automatically set. Then, a template effectiveness degree in a case that a partial image included in each region is set as the template candidate image is calculated and a template candidate image highest in template effectiveness degree is set as template image 150. By adopting such automated processing, an effective template image can be set without trials and errors by the user.

«d4: Summary»

Some embodiments of processing for calculating a template effectiveness degree will be described below. In each embodiment below, in setting a template image used for template matching, a template effectiveness degree with which a set template candidate image indicates appropriateness as a template image is calculated. In calculation of this template effectiveness degree, basically, a value associated with frequency distribution in a template candidate image is calculated. By calculating such a template effectiveness degree and notifying a user of the template effectiveness degree, the user can readily determine whether the template candidate image is good or bad as a template image.

[E. First Embodiment]

In a first embodiment, a processing example in which a template effectiveness degree is calculated based on information on a frequency space in a template candidate image will be described.

More specifically, the image processing apparatus according to the first embodiment calculates a template effectiveness degree by calculating effectiveness of an individual frequency by subjecting a template candidate image to frequency conversion, and by adding a frequency effectiveness degree calculated for each frequency. By using such information on a frequency space, for example, a degree of effectiveness in template matching using phase only correlation (POC) can more appropriately be calculated.

«e1: Functional Configuration»

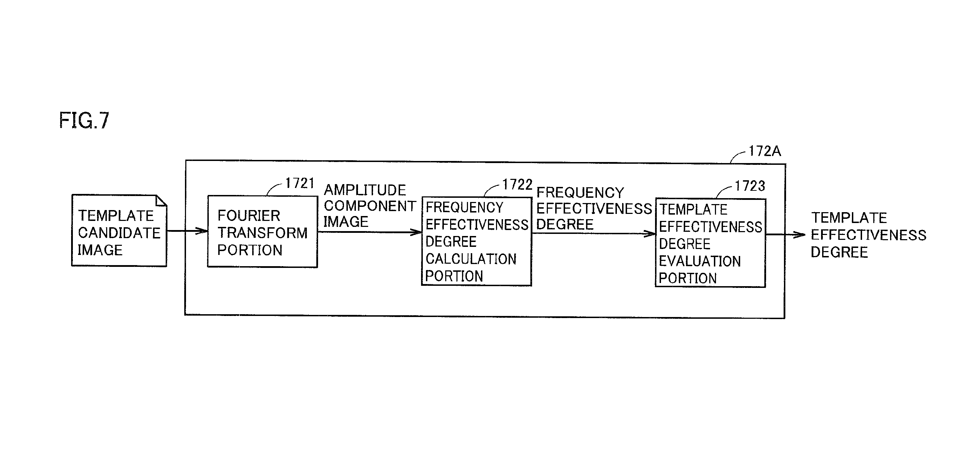

Fig. 7 is a block diagram showing a further detailed functional configuration of the template effectiveness degree calculation portion (Fig. 4) according to the first embodiment of the present invention. In Fig. 7, for distinction from other embodiments, the template effectiveness degree calculation portion shown in Fig. 4 will be denoted as a template effectiveness degree calculation portion 172A. Such a functional configuration is implemented as CPU 102 executes template image evaluation program 114 in image processing apparatus 100 shown in Fig. 2. Details of each functional configuration will be described below.

Referring to Fig. 7, template effectiveness degree calculation portion 172A according to the first embodiment includes a Fourier transform portion 1721, a frequency effectiveness degree calculation portion 1722, and a template effectiveness degree evaluation portion 1723.

Fourier transform portion 1721 subjects a template candidate image to frequency conversion (typically, Fourier transform) and generates an amplitude component image representing an amplitude component in a frequency space from the template candidate image. Frequency effectiveness degree calculation portion 1722 calculates a frequency effectiveness degree for an individual frequency, of the amplitude component image. Template effectiveness degree evaluation portion 1723 calculates a template effectiveness degree of the template candidate image of interest by summing these frequency effectiveness degrees for frequencies.

Namely, template effectiveness degree calculation portion 172A calculates a frequency effectiveness degree based on amplitude of a frequency included in the template candidate image and calculates a template effectiveness degree based on the frequency effectiveness degree. According to the first embodiment, effectiveness of a frequency can individually be determined based on magnitude of amplitude. Namely, in the first embodiment, magnitude of amplitude in a frequency space is employed as a value associated with frequency distribution in a template candidate image and a template effectiveness degree is calculated based on this magnitude of amplitude.

Details of a method for calculating a frequency effectiveness degree in frequency effectiveness degree calculation portion 1722 and a method for calculating a template effectiveness degree based on the frequency effectiveness degree in template effectiveness degree evaluation portion 1723 will be described below, together with some modifications.

«e2: MTF-Based Approach»

With the present approach, a frequency effectiveness degree is calculated by using a modulation transfer function (MTF) expressing spatial frequency characteristics of camera 4 which photographs image for template extraction 116 to thereby evaluate an amplitude component image. Thus, the reason why strength of amplitude in the amplitude component image is evaluated based on MTF is because strength of amplitude at each frequency can be evaluated based on reasonable criteria by using spatial frequency characteristics as camera 4.

An amplitude component image obtained through frequency conversion in Fourier transform portion 1721 is denoted as P and an amplitude component corresponding to an X-direction frequency fx and a Y-direction frequency fy is denoted as P(fx, fy) (-F ≤ fx ≤ F, -F ≤ fy ≤ F). In addition, an MTF of camera 4 at a frequency (fx, fy) is denoted as MTF(fx, fy). MTF(fx, fy) is experimentally obtained in advance and normalization to MTF(0, 0) = 1 has been made.

Initially, frequency effectiveness degree calculation portion 1722 obtains an amplitude component P(0, 0) of a DC component from amplitude component image P. Then, as shown in the Expression (1) below, an effective amplitude determination function Fp(fx, fy) is set. $\alpha$ represents a value for a constant.

$$Fp(fx, fy) = \alpha \cdot P(0, 0) \cdot \mathrm{MTF}(fx, fy) \qquad (0 < \alpha < 1) \quad \dots (1)$$

Then, frequency effectiveness degree calculation portion 1722 calculates a frequency effectiveness degree vp(fx, fy) for a frequency (fx, fy) in accordance with the Expression (2) below. In addition, template effectiveness degree evaluation portion 1723 calculates a template effectiveness degree V by summing frequency effectiveness degrees vp(fx, fy) in accordance with the Expression (3) below. Namely, frequency effectiveness degree calculation portion 1722 calculates a frequency effectiveness degree from amplitude at each frequency.

$$vp(fx, fy) = \begin{cases} 1 & (P(fx, fy) \geqq Fp(fx, fy)) \\ 0 & (else) \end{cases} \qquad \dots (2)$$

$$V = \sum_{-F \leqq fx \leqq F} \sum_{-F \leqq fy \leqq F} vp(fx, fy) \qquad \dots (3)$$

When the number of frequency components weak in amplitude is large, a result of calculation of frequency effectiveness degree vp may become unstable. Therefore, in the present approach, frequency effectiveness degree vp is calculated in accordance with magnitude of amplitude. More specifically, when amplitude in amplitude component image P is lower than prescribed magnitude, frequency effectiveness degree calculation portion 1722 regards that element as zero (0). Namely, amplitude smaller than effective amplitude determination function Fp(fx, fy) shown in the Expression (1) described above is excluded from calculation of frequency effectiveness degree vp. Effectiveness for an individual frequency is thus determined.

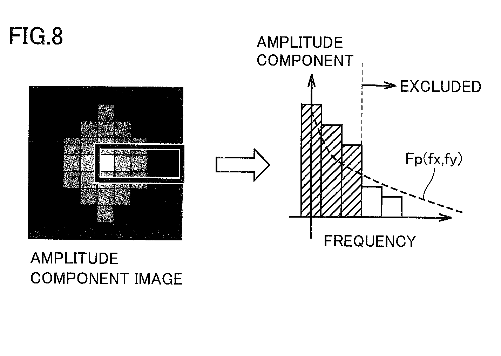

Fig. 8 is a diagram for illustrating processing in the frequency effectiveness degree calculation portion according to the first embodiment of the present invention. Fig. 8 shows relation of a frequency-amplitude component in a certain region in an amplitude component image. Namely, Fig. 8 shows one example of an amplitude component image on the left and shows on the right, relation between an amplitude component and effective amplitude determination function Fp(fx, fy) for a certain region in the amplitude component image. In the graph shown on the right in Fig. 8, a frequency corresponding to a hatched amplitude component is determined as effective and a frequency other than that is determined as ineffective. A frequency determined as ineffective is not used for calculation of frequency effectiveness degree vp.

When the number of frequency components weak in amplitude is large, a result of calculation of frequency effectiveness degree vp may become unstable. With the present approach, however, these frequency components weak in amplitude are considered as ineffective. Thus, calculation of frequency effectiveness degree vp can further be stabilized.

A threshold value for each frequency for exclusion from calculation of frequency effectiveness degree vp is determined depending on a frequency to be evaluated. Namely, as shown in the Expression (1) described above, effective amplitude determination function Fp(fx, fy) is determined based on a frequency component corrected by using the MTF of camera 4 and possessed by a subject. More specifically, effective amplitude determination function Fp(fx, fy) is obtained by multiplying the MTF of camera 4 by a constant ($\alpha$).

By using such effective amplitude determination function Fp(fx, fy), reasonable determination in an intermediate-high frequency region where amplitude tends to be small can be made. In addition, reasonable criteria can be set by using spatial frequency characteristics as camera 4.

<<e3: MTF-Based Approach (Modification 1)>>

According to a technical concept similar to the "MTF-based approach" described above, a frequency effectiveness degree can also be calculated in line with a procedure as below.

Initially, frequency effectiveness degree calculation portion 1722 obtains amplitude component P(0,0) of a DC component from amplitude component image P. Then, amplitude component P(0,0) is normalized as shown in the Expression (4) below.

$$P'(fx, fy) = P(fx, fy) / \{P(0, 0) \cdot \mathrm{MTF}(fx, fy)\} \qquad \ldots (4)$$

Then, frequency effectiveness degree calculation portion 1722 calculates a frequency effectiveness degree vn(fx, fy) for frequency (fx, fy) by using a normalized amplitude component image P' in accordance with the Expression (5) below. As shown in the Expression (5), when amplitude is lower than prescribed magnitude (here, a constant $\beta$) in normalized amplitude component image P', frequency effectiveness degree calculation portion 1722 regards that element as zero (0).

Furthermore, template effectiveness degree evaluation portion 1723 calculates template effectiveness degree V by summing frequency effectiveness degrees vn(fx, fy) in accordance with the Expression (6) below.

$$vn(fx, fy) = \begin{cases} 1 & (P'(fx, fy) \geqq \beta) \quad (0 < \beta < 1) \\ 0 & (else) \end{cases} \qquad \ldots (5)$$

$$V = \sum_{-F \leqq fx \leqq F} \sum_{-F \leqq fy \leqq F} vn(fx, fy) \qquad \ldots (6)$$

When the number of frequency components weak in amplitude is large, a result of calculation of frequency effectiveness degree vn may become unstable. With the present approach, however, these frequency components weak in amplitude are considered as ineffective. Namely, when amplitude of any frequency included in a template candidate image is smaller than a prescribed value, frequency effectiveness degree calculation portion 1722 regards frequency effectiveness degree vn for that frequency as zero. Thus, calculation of frequency effectiveness degree vn can further be stabilized.

«e4: MTF-Based Approach (Modification 2)»

A frequency effectiveness degree may be calculated in consideration of noise of camera 4 in addition to spatial frequency characteristics (MTF) of camera 4. Specifically, by subjecting an image obtained by photographing a plain surface in advance (hereinafter also denoted as a "plain image") to frequency conversion, conversion to information on a frequency space is carried out to thereby obtain a plain amplitude image Pn. An amplitude component Pn(fx, fy) of this plain amplitude image Pn originates from sensor noise of camera 4.

Initially, frequency effectiveness degree calculation portion 1722 obtains amplitude component P(0, 0) of a DC component from amplitude component image P. Then, effective amplitude determination function Fp(fx, fy) is set by using amplitude component Pn(fx, fy) of plain amplitude image Pn, as shown in the Expression (7) below. α represents a value for a constant.

Then, frequency effectiveness degree calculation portion 1722 calculates a frequency effectiveness degree vp'(fx, fy) for frequency (fx, fy) in accordance with the Expression (8) below. Furthermore, template effectiveness degree evaluation portion 1723 calculates template effectiveness degree V by summing frequency effectiveness degrees vp'(fx, fy) in accordance with the Expression (9) below.

$$Fp(fx, fy) = \alpha \cdot \mathrm{MTF}(fx, fy) \cdot P(0, 0) - Pn(0, 0) \qquad \ldots (7)$$

$$vp'(fx, fy) = \begin{cases} 1 & (P(fx, fy) - Pn(fx, fy) \geqq Fp(fx, fy)) \\ 0 & (else) \end{cases} \qquad \ldots (8)$$

$$V = \sum_{-F \leqq fx \leqq F} \sum_{-F \leqq fy \leqq F} vp'(fx, fy) \qquad \ldots (9)$$

When the number of frequency components weak in amplitude is large, a result of calculation of frequency effectiveness degree vn may become unstable. With the present approach, however, these frequency components weak in amplitude are considered as ineffective. Thus, calculation of frequency effectiveness degree vn can further be stabilized.

Furthermore, with the present approach, a frequency effectiveness degree is calculated after an amplitude component originating from noise is subtracted from an amplitude component of a template candidate image. Thus, a template effectiveness degree can be calculated with influence by noise of camera 4 having been lessened. Namely, an effective frequency is determined with frequency characteristics originating from noise of camera 4 having been removed. Thus, a relatively strong frequency originating from a noise component of camera 4 can be prevented from being reflected on calculation of a template effectiveness degree.

«e5: Approach Prioritizing Amplitude Component in Intermediate Frequency Region (No. 1)»

Greater amplitude may appear in an amplitude component in a high frequency region of amplitude component image P, under the influence by noise of camera 4. On the other hand, greater amplitude may appear in an amplitude component in a low frequency region, under the influence by variation in illumination. Therefore, a frequency effectiveness degree may be calculated with an amplitude component in an intermediate frequency region being prioritized.

In calculating a frequency effectiveness degree with an amplitude component in such an intermediate frequency region being prioritized, for example, an expression for calculating a frequency effectiveness degree vr(fx, fy) as shown in the Expression (10) below can be employed. Namely, a frequency effectiveness degree vr(fx, fy) is obtained by multiplying frequency effectiveness degree vp(fx, fy) calculated with any approach described above by one type of window functions. This window function is such a function as taking a maximum value when both of X-direction frequency fx and Y-direction frequency fy are at a half value of maximum amplitude F (F/2) and gradually decreasing in value thereof as X-direction frequency and/or Y-direction frequency fy is/are distant from the half value (F/2). By using such a window function, a frequency effectiveness degree can be calculated with an amplitude component in an intermediate frequency region being prioritized.

More specifically, frequency effectiveness degree calculation portion 1722 calculates frequency effectiveness degree vp(fx, fy) for frequency (fx, fy) in accordance with any approach described above. Then, frequency effectiveness degree calculation portion 1722 calculates frequency effectiveness degree vr(fx, fy) by multiplying this frequency effectiveness degree vp(fx, fy) by a window function. Furthermore, template effectiveness degree evaluation portion 1723 calculates template effectiveness degree V by summing frequency effectiveness degrees vr(fx, fy) in accordance with the Expression (11) below.

$$vr(fx, fy) = vp(fx, fy) \cdot \exp\left(-\left(\left(|fx| - \frac{F}{2}\right)^2 + \left(|fy| - \frac{F}{2}\right)^2\right)\right) \quad \ldots (10)$$

$$V = \sum_{-F \leq fx \leq F} \sum_{-F \leq fy \leq F} vr(fx, fy) \quad \ldots (11)$$

With the present approach, a ratio of contribution to calculation of a frequency effectiveness degree by an amplitude component in a high-frequency region included in a template candidate image is lowered. Namely, when a frequency component included in a template candidate image is relatively high, template effectiveness degree calculation portion 172 calculates a frequency effectiveness degree indicating that being effective is low. In other words, template effectiveness degree calculation portion 172 regards a frequency effectiveness degree for a frequency higher than a prescribed value included in a template candidate image as zero. Though an amplitude component in a high-frequency region of amplitude component image P may include a behavior originating from noise under the influence by noise of camera 4, according to the present approach, such an influence can be lessened.

With the present approach, a ratio of contribution to calculation of a frequency effectiveness degree by an amplitude component in a low-frequency region included in a template candidate image is lowered. Namely, when a frequency component included in a template candidate image is relatively low, template effectiveness degree calculation portion 172 calculates a frequency effectiveness degree indicating that being effective is low. In other words, template effectiveness degree calculation portion 172 regards a frequency effectiveness degree for a frequency lower than a prescribed value included in a template candidate image as zero. Though an amplitude component in a low-frequency region of amplitude component image P may include a behavior originating from noise under the influence by shading or variation in illumination, according to the present approach, such an influence can be lessened.

«e6: Approach Prioritizing Amplitude Component in Intermediate Frequency Region (No. 2)»

Instead of the approach described above, another window function may be employed. For example, an expression for calculating frequency effectiveness degree vr(fx, fy) as shown in the Expression (12) below can be employed. Namely, frequency effectiveness degree vr(fx, fy) is obtained by multiplying frequency effectiveness degree vp(fx, fy) calculated with any approach described above by one type of window functions. Similarly to the approach described above, this window function is also such a function as taking a maximum value when both of X-direction frequency fx and Y-direction frequency fy are at a half value of maximum amplitude F (F/2) and gradually decreasing in value thereof as X-direction frequency fix and/or Y-direction frequency fy is/are distant from the half value (F/2). By using such a window function, a frequency effectiveness degree can be calculated with an amplitude component in an intermediate frequency region being prioritized.

More specifically, frequency effectiveness degree calculation portion 1722 calculates frequency effectiveness degree vp(fx, fy) for frequency (fx, fy) in accordance with any approach described above. Then, frequency effectiveness degree calculation portion 1722 calculates frequency effectiveness degree vr(fx, fy) by multiplying this frequency effectiveness degree vp(fx, fy) by a window function. Furthermore, template effectiveness degree evaluation portion 1723 calculates template effectiveness degree V by summing frequency effectiveness degrees vr(fx, fy) in accordance with the Expression (13) below.

$$vr(fx, fy) = \frac{vp(fx, fy)}{1 + \left(\left(|fx| - \frac{F}{2}\right)^2 + \left(|fy| - \frac{F}{2}\right)^2\right)} \quad \ldots (12)$$

$$V = \sum_{-F \le fx \le F} \sum_{-F \le fy \le F} vr(fx, fy) \qquad \qquad \text{... (13)}$$

With the present approach, a ratio of contribution to calculation of a frequency effectiveness degree by an amplitude component in a high-frequency region included in a template candidate image is lowered. Namely, when a frequency component included in a template candidate image is relatively high, template effectiveness degree calculation portion 172 calculates a frequency effectiveness degree indicating that effectiveness is low. In other words, template effectiveness degree calculation portion 172 regards a frequency effectiveness degree for a frequency higher than a prescribed value included in a template candidate image as zero. Though an amplitude component in a high-frequency region of amplitude component image P may include a behavior originating from noise under the influence by noise of camera 4, according to the present approach, such an influence can be lessened.

With the present approach, a ratio of contribution to calculation of a frequency effectiveness degree by an amplitude component in a low-frequency region included in a template candidate image is lowered. Namely, when a frequency component included in a template candidate image is relatively low, template effectiveness degree calculation portion 172 calculates a frequency effectiveness degree indicating that effectiveness is low. In other words, template effectiveness degree calculation portion 172 regards a frequency effectiveness degree for a frequency lower than a prescribed value included in a template candidate image as zero. Though an amplitude component in a low-frequency region of amplitude component image P may include a behavior originating from noise under the influence by shading or variation in illumination, according to the present approach, such an influence can be lessened.

«e7: Approach Prioritizing Amplitude Component in Intermediate Frequency Region (No. 3)»

Instead of the approach described above, a frequency region used for calculation of a template effectiveness degree may be restricted. For example, an expression for calculating template effectiveness degree V as shown in the Expression (14) below can be employed. Namely, template effectiveness degree V is calculated by integrating frequency effectiveness degree vr(fx, fy) with respect to X-direction frequency fx and Y-direction frequency fy within a range from a lower limit frequency F1 to an upper limit frequency Fh. Namely, a component of a frequency lower than lower limit frequency F1 and a component of a frequency higher than upper limit frequency Fh are not used for calculation of template effectiveness degree V.

$$V = \sum_{\substack{-Fh \le fx \le -Fl \\ Fl \le fx \le Fh}} \sum_{\substack{-Fh \le fy \le -Fl \\ Fl \le fy \le Fh}} vp(fx, fy) \qquad \left(0 \le Fl < Fh \le F\right) \quad \text{... (14)}$$

With the present approach, a ratio of contribution to calculation of a frequency effectiveness degree by an amplitude component in a high-frequency region included in a template candidate image is set to zero. Namely, when a frequency component included in a template candidate image is relatively high, template effectiveness degree calculation portion 172 calculates a frequency effectiveness degree indicating that effectiveness is low. In other words, template effectiveness degree calculation portion 172 regards a frequency effectiveness degree for a frequency lower than a prescribed value included in a template candidate image as zero. Though an amplitude component in a high-frequency region of amplitude component image P may include a behavior originating from noise under the influence by noise of camera 4, according to the present approach, such an influence can be lessened.

With the present approach, a ratio of contribution to calculation of a frequency effectiveness degree by an amplitude component in a low-frequency region included in a template candidate image is set to zero. Namely, when a frequency component included in a template candidate image is relatively low, template effectiveness degree calculation portion 172 calculates a frequency effectiveness degree indicating that effectiveness is low. In other words, template effectiveness degree calculation portion 172 regards a frequency effectiveness degree for a frequency lower than a prescribed value included in a template candidate image as zero. Though an amplitude component in a low-frequency region of amplitude component image P may include a behavior originating from noise under the influence by shading or variation in illumination, according to the present approach, such an influence can be lessened.

«e8: Approach in Consideration of Magnitude of Amplitude (No. 1)»

Basically, as there are more frequency components great in amplitude, a template effectiveness degree is desirably higher, and hence a template effectiveness degree may be calculated by using amplitude at each frequency in an amplitude component image as a frequency effectiveness degree. More specifically, frequency effectiveness degree calculation portion 1722 and template effectiveness degree evaluation portion 1723 calculate template effectiveness degree V of a template candidate image of interest by directly summing amplitude components P(fx, fy) in amplitude component image P in accordance with the Expression (15) below.

$$V = \sum_{-F \leq fx \leq F} \sum_{-F \leq fy \leq F} P(fx, fy) \qquad \dots (15)$$

Thus, frequency effectiveness degree calculation portion 1722 and template effectiveness degree evaluation portion 1723 output magnitude of amplitude included in a template candidate image as a template effectiveness degree.

With the present approach, a template effectiveness degree is calculated with amplitude at each frequency of an amplitude component image being regarded as it is as frequency effective. Therefore, as there are more frequency components great in amplitude, a template effectiveness degree having a higher value is calculated.

«e9: Approach in Consideration of Magnitude of Amplitude (No. 2)»

Instead of the approach described above, an approach as follows can also be adopted as a method of reflecting amplitude at each frequency of an amplitude component image on a template effectiveness degree. Namely, as shown in the Expression (16) below, template effectiveness degree V is calculated by defining a product obtained by multiplying frequency effectiveness degree vp(fx, fy) calculated with the approach described above by amplitude component P(fx, fy) of amplitude component image P as a weight and summing this frequency effectiveness degrees.

$$V = \sum_{-F \leq fx \leq F} \sum_{-F \leq fy \leq F} P(fx, fy) \cdot vp(fx, fy) \qquad \dots (16)$$

According to the present approach, a template effectiveness degree is calculated by using amplitude at each frequency of an amplitude component image as a weight. Therefore, as there are more frequency components great in amplitude, a template effectiveness degree having a higher value is calculated.

«e10: Approach in Consideration of Influence by High-Frequency Region»

In calculating a frequency effectiveness degree in accordance with the approach described above, influence by a high-frequency region in which amplitude tends to be small in terms of characteristics of camera 4 may be excluded. Namely, when a value for the MTF of a frequency of interest is not higher than a prescribed value with the MTF for a DC component being defined as the reference, the MTF is regarded as zero (0). Thus, a component of which amplitude tends to be small in terms of characteristics of camera 4 can be excluded from processing for calculating a template effectiveness degree.

More specifically, a frequency effectiveness degree only of a frequency (fx, fy) for which the MTF of camera 4 satisfies the Expression (17) below may be calculated in accordance with the procedure as described above. Here, a frequency effectiveness degree of frequency (fx, fy) not satisfying the Expression (17) may be set to "0".

$$\mathrm{MTF}(fx, fy) \geq \gamma \cdot \mathrm{MTF}(0, 0) \qquad (0 < \gamma < 1) \qquad \dots (17)$$

Namely, when a value for spatial frequency characteristics at a frequency of interest (MTF(fx, fy)) is lower than a prescribed ratio (y) with a value for a DC component of the spatial frequency characteristics (MTF(0, 0)) of camera 4 which has photographed image for template extraction 116 being defined as the reference, frequency effectiveness degree calculation portion 1722 regards a frequency effectiveness degree of that frequency of interest as zero.

According to the present approach, influence by a high-frequency region can be lessened. Namely, influence by a high-frequency band where amplitude tends to be small in terms of characteristics of camera 4 can be excluded from calculation of a template effectiveness degree.

<<e11: Advantages>>

In template matching using phase correlation relying on a frequency component as in POC, a highly accurate result of matching can be obtained in a stable manner by using a template image in which various frequency components are present without unevenness. In the present embodiment, whether or not a template candidate image is effective can readily be determined by calculating a frequency effectiveness degree indicating whether or not there are many frequency components having sufficient amplitude. Then, based on this result of determination, an appropriate template image can be generated.

[F. Second Embodiment]

When a template candidate image is constituted of patterns having repetition, distribution of frequency components having effective magnitude of amplitude may become uneven in a frequency space. Such a pattern is unsuitable as a template image used for template matching relying on phase information on a frequency space such as POC, and a template effectiveness degree should be calculated to indicate a lower value. In a second embodiment, a configuration capable of more appropriately calculating a template effectiveness degree in a case including such a repeated pattern will be described. Namely, in the second embodiment, diversity in a direction of distribution of frequency components is employed as a value associated with frequency distribution of a template candidate image and a template effectiveness degree is calculated based on a degree of this diversity.

«f1: Functional Configuration»

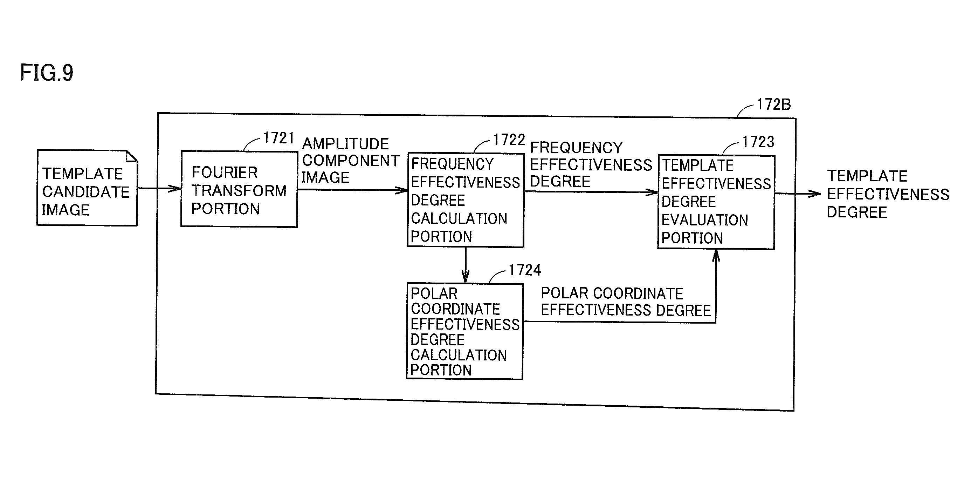

Fig. 9 is a block diagram showing a further detailed functional configuration of the template effectiveness degree calculation portion (Fig. 4) according to the second embodiment of the present invention. In Fig. 9, for distinction from other embodiments, the template effectiveness degree calculation portion shown in Fig. 4 will be denoted as a template effectiveness degree calculation portion 172B. Such a functional configuration is implemented as CPU 102 executes template image evaluation program 114 in image processing apparatus 100 shown in Fig. 2. Details of each functional configuration will be described below.

Referring to Fig. 9, template effectiveness degree calculation portion 172B according to the second embodiment is different from template effectiveness degree calculation portion 172A according to the first embodiment shown in Fig. 7, in further including a polar coordinate effectiveness degree calculation portion 1724. Since features other than that have been described in the first embodiment, detailed description will not be repeated.

Fourier transform portion 1721 subjects a template candidate image to frequency conversion (typically, Fourier transform) and generates amplitude component image P representing an amplitude component in a frequency space from the template candidate image.

Frequency effectiveness degree calculation portion 1722 calculates frequency effectiveness degree $vp(fx, fy)$ for amplitude component image P in accordance with the Expression (2) described above or calculates frequency effectiveness degree $vn(fx, fy)$ in accordance with the Expression (5). Hereinafter, a frequency effectiveness degree is also simply denoted as a "frequency effectiveness degree $v(fx, fy)$."

Polar coordinate effectiveness degree calculation portion 1724 calculates a polar coordinate $(r, \theta)$ by subjecting each frequency $(fx, fy)$ to polar coordinate conversion. Then, polar coordinate effectiveness degree calculation portion 1724 calculates a polar coordinate effectiveness degree $v(r, \theta)$ corresponding to frequency effectiveness degree $v(fx, fy)$.

Template effectiveness degree evaluation portion 1723 calculates a degree of effectiveness for each angle $s(\theta)$ in accordance with the Expression (18) below, by using polar coordinate effectiveness degree $v(r, \theta)$.

$$s(\theta) = \sum_{\theta - d\theta \leq \theta \leq \theta + d\theta} \sum_r v(r, \theta) \qquad \dots (18)$$

Furthermore, template effectiveness degree evaluation portion 1723 calculates template effectiveness degree V in accordance with the Expression (20) below, by using a function $vs(\theta)$ which shows an effective value only when a degree of effectiveness for each angle $s(\theta)$ exceeds n (a positive constant) as shown in the Expression (19) below.

$$vs(\theta) = \begin{cases} 1 & (s(\theta) > n) \\ 0 & (else) \end{cases} \qquad \dots (19)$$

$$V = \sum_\theta vs(\theta) \qquad \dots (20)$$

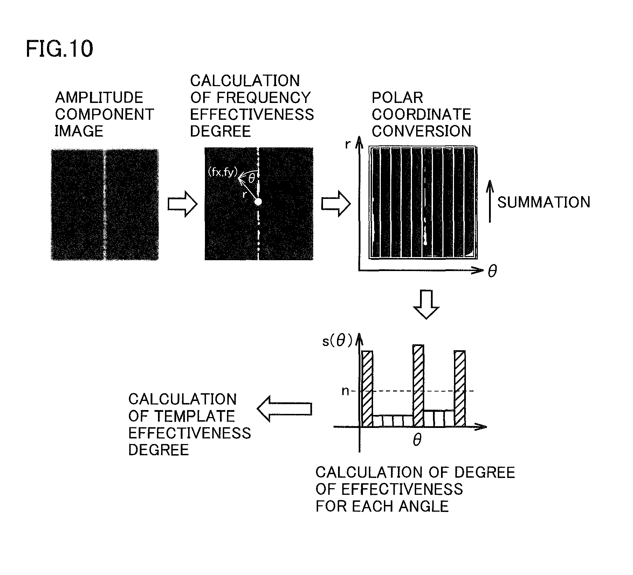

Fig. 10 is a diagram for illustrating processing for calculating a template effectiveness degree according to the second embodiment of the present invention. In an amplitude component image shown in Fig. 10, white linear distribution is present unevenly in the center, and concentration at such a specific frequency is preferably eliminated.

Initially, frequency effectiveness degree calculation portion 1722 calculates frequency effectiveness degree v(fx, fy) of an amplitude component image (see a graph in an upper central portion in Fig. 10). In succession, polar coordinate effectiveness degree calculation portion 1724 calculates polar coordinate effectiveness degree v(r, θ) corresponding to frequency effectiveness degree v(fx, fy) (see a graph in an upper right portion in Fig. 10).

Template effectiveness degree evaluation portion 1723 calculates degree of effectiveness for each angle s(θ) from polar coordinate effectiveness degree v(r, θ). Specifically, as shown in Fig. 10, degree of effectiveness for each angle s(θ) is calculated by integration for each prescribed angular range (θ-dθ < θ < θ+dθ) on a polar coordinate space (the θ-r coordinate system). Whether or not this calculated degree of effectiveness for each angle s(θ) exceeds threshold value n is determined, only a component exceeding threshold value n is validated, and then template effectiveness degree V is calculated. Thus, in the present embodiment, a template effectiveness degree is calculated based on unevenness in amplitude distribution.

As above, polar coordinate effectiveness degree calculation portion 1724 subjects amplitude distribution of a template candidate image to polar coordinate conversion, and template effectiveness degree evaluation portion 1723 outputs a template effectiveness degree which indicates a value higher as unevenness of amplitude distribution obtained by polar coordinate conversion is less.

«f2: Advantages»

In the present embodiment, processing is performed such that, as diversity in a direction of distribution of frequency components is greater, a template effectiveness degree indicating a higher value is output. More specifically, a template effectiveness degree indicating effectiveness higher with less unevenness in distribution of amplitude components in connection with an angle is calculated, by subjecting an amplitude component image to polar coordinate conversion.

For example, in a template image including a pattern having periodicity, distribution of frequency components is uneven, and accuracy in template matching relying on phase information on a frequency space such as POC becomes poor. Such a situation, however, can be avoided by adopting the approach according to the present embodiment.

Thus, according to the present embodiment, a template effectiveness degree indicating a lower value for such a template image as having a repeated pattern is calculated, and a user can avoid setting of such an undesirable template image.

[G. Third Embodiment]

Presence or absence of a strong edge originating from a subject in a template candidate image can be determined based on magnitude of an image gradient. Presence or absence of a repeated pattern in a template candidate image can be determined based on diversity in orientations of image gradient vectors. Then, in the present embodiment, a configuration example in which a template effectiveness degree is calculated based on information on such an image gradient will be described. Namely, in a third embodiment, an image gradient is employed as a value associated with frequency distribution in a template candidate image and a template effectiveness degree is calculated based on this image gradient.

«g1: Functional Configuration»

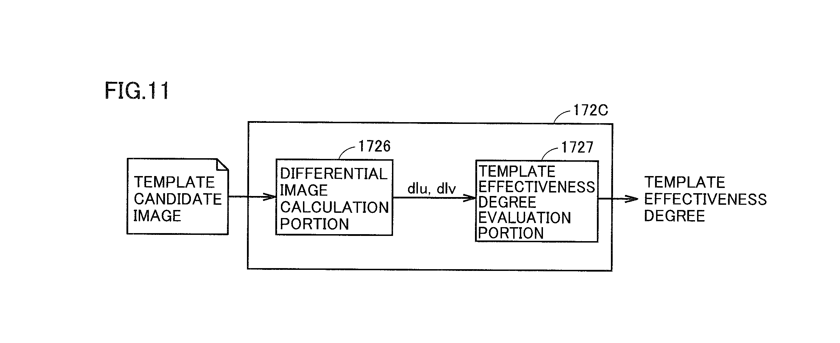

Fig. 11 is a block diagram showing a further detailed functional configuration of the template effectiveness degree calculation portion (Fig. 4) according to the third embodiment of the present invention. In Fig. 11, for distinction from other embodiments, the template effectiveness degree calculation portion shown in Fig. 4 will be denoted as a template effectiveness degree calculation portion 172C. Such a functional configuration is implemented as CPU 102 executes template image evaluation program 114 in image processing apparatus 100 shown in Fig. 2. Details of each functional configuration will be described below.

Referring to Fig. 11, template effectiveness degree calculation portion 172C according to the third embodiment includes a differential image calculation portion 1726 and a template effectiveness degree evaluation portion 1727.

Differential image calculation portion 1726 calculates magnitude of image gradients in u and v directions of a template candidate image (hereinafter also denoted as a "template candidate image 1") and has the image gradients stored as dlu and dlv. Here, template candidate image 1 is a two-dimensional image having a u direction and a v direction and differential image calculation portion 1726 calculates a u-direction differential image and a v-direction differential image of template candidate image 1. Generation of such a differential image is realized by using a Sobel filter.

dIu(u, v) and dIv(u, v) represent magnitude of an image gradient in the u direction and an image gradient in the v direction at a pixel position (u, v) on template candidate image 1.

Template effectiveness degree evaluation portion 1727 calculates template effectiveness degree V by using image gradients dIu(u, v) and dIv(u, v).

Some approaches for calculating template effectiveness degree V will be described below.

«g2: Approach Based on the Number of Edges Included in Template Candidate Image»

Template effectiveness degree evaluation portion 1727 calculates template effectiveness degree V in accordance with the Expression (22) below, by using a function vd(u, v) indicating an effective value only when a norm of image gradient dIu(u, v) and image gradient dIv(u, v) exceeds t (a positive constant) as shown in the Expression (21) below.

$$vd(u, v) = \begin{cases} 1 & \|(dIu(u, v), dIv(u, v))\| > t \\ 0 & else \end{cases} \qquad \dots (21)$$

$$V = \sum_u \sum_v vd(u, v) \qquad \dots (22)$$

Template effectiveness degree V calculated in accordance with the Expression (22) corresponds to the number of pixels considered as an edge included in template candidate image 1.

According to the present scheme, a template effectiveness degree is calculated based on an image gradient. More specifically, a template effectiveness degree is calculated based on magnitude of an image gradient (a width of an image gradient and the number of edge pixels). As shown in the Expression (22) described above, the number of pixels within a template candidate image, of which magnitude of image gradient exceeds prescribed magnitude, is defined as being effective, which is used for calculation of a template effectiveness degree. In other words, template effectiveness degree calculation portion 172C outputs the number of pixels within a template candidate image, of which magnitude of an image gradient is greater than a prescribed value, as a degree of effectiveness. By adopting such a scheme, presence or absence of an edge large in image gradient, that is, strong, can be quantified, and whether or not a template candidate image is effective as a template image can be evaluated based on presence or absence of this strong edge.

«g3: Approach Based on Standard Deviation of Inner Product of Directional Unit Vector and Normalized Image Gradient Vector»

Presence or absence of a repeated pattern within a template candidate image may be evaluated based on diversity in a direction of an image gradient vector. More specifically, a standard deviation of an inner product (corresponding to cos of an angle between vectors) of a v-directional unit vector and a normalized image gradient vector of template candidate image 1 can be evaluated as diversity in a direction of an image gradient vector. Then, diversity in a direction of this image gradient vector can be reflected on a template effectiveness degree.

More specifically, template effectiveness degree evaluation portion 1727 calculates a standard deviation of an inner product of a v-directional unit vector and a normalized image gradient vector in accordance with the Expression (24) below, by using function vd(u, v) indicating an effective value only when a norm of image gradient dIu(u, v) and image gradient dIv(u, v) exceeds t (a positive constant) as shown in the Expression (23) below. Then, template effectiveness degree evaluation portion 1727 calculates template effectiveness degree V from these values.

$$vd(u, v) = \begin{cases} 1 & \|(dIu(u, v), dIv(u, v))\| > t \\ 0 & else \end{cases} \qquad \dots (23)$$

$$V = \sigma_{u,v}\left(|(dIu(u, v), dIv(u, v))| \cdot \begin{pmatrix} 0 \\ 1 \end{pmatrix}\right) \cdot \sum_u \sum_v vd(u, v) \qquad \dots (24)$$

As above, template effectiveness degree calculation portion 172C adds an amount of correction in proportion to magnitude of diversity in a direction of an image gradient vector within a template image candidate to a template effectiveness degree. According to the present scheme, a template effectiveness degree is calculated based on an image gradient and the template effectiveness degree is corrected based on magnitude of diversity in a direction of an image gradient vector. For example, when image gradient vectors are present unevenly in one direction, search for a position in a direction orthogonal to that image gradient vector may become unstable. According to the present scheme, however, such a disadvantage can be avoided.

According to the present scheme, a template effectiveness degree is calculated such that one with greater variance/standard deviation of an angle of an image gradient vector with respect to a v-directional unit vector indicates higher effectiveness. According to the present scheme, direction distribution of image gradient vectors can be quantified.

«g4: Approach Based on Variance of Normalized Image Gradient Vector»

Variance of a normalized image gradient vector may be employed as a method of evaluating presence or absence of a repeated pattern within a template candidate image based on diversity in a direction of an image gradient vector as described above. More specifically, a covariance matrix of normalized image gradient vectors is calculated and the sum of diagonal components of the covariance matrix (corresponding to variance of image gradient vectors) can be evaluated as diversity in a direction of image gradient vectors. Then, this diversity in a direction of image gradient vectors can be reflected on a template effectiveness degree.

More specifically, template effectiveness degree evaluation portion 1727 calculates a covariance matrix of normalized image gradient vectors in accordance with the Expression (26) below by using function vd(u, v) indicating an effective value only when a norm of image gradient dIu(u, v) and image gradient dIv(u, v) exceeds t (a positive constant) as shown in the Expression (25) below. Then, template effectiveness degree evaluation portion 1727 calculates template effectiveness degree V from these values, based on the calculated sum of diagonal components of the covariance matrix.

$$vd(u, v) = \begin{cases} 1 & \|(dIu(u, v), dIv(u, v))\| > t \\ 0 & else \end{cases} \qquad \ldots (25)$$

(E() representing an average of components of interest)

$$\Sigma = \begin{bmatrix} E((dIu - E(dIu)) \cdot (dIu - E(dIu))) & E((dIu - E(dIu)) \cdot (dIv - E(dIv))) \\ E((dIv - E(dIv)) \cdot (dIu - E(dIu))) & E((dIv - E(dIv)) \cdot (dIv - E(dIv))) \end{bmatrix} \qquad \left.\begin{array}{c}\\\\\end{array}\right\} \quad \ldots (26)$$

$$V = (\Sigma_{11} + \Sigma_{22}) \cdot \sum_u \sum_v vd(u, v)$$

According to the present scheme, a template effectiveness degree which indicates a lower value when a template candidate image is not appropriate as a template image as in a case that, though there are many pixels which seem to be strong edges, orientations of edges are uniform or include a repeated pattern can be calculated.

«g5: Approach Based on Variance/Standard Deviation of Magnitude of Image Gradient»

An approach as follows may be adopted as the approach for calculating a template effectiveness degree, with one with higher variance/standard deviation of magnitude of an image gradient being regarded as being effective. Namely, as shown in the Expression (27) below, a template effectiveness degree may be calculated by using a standard deviation of magnitude of an image gradient vector.

According to the present scheme, a template effectiveness degree can be calculated specifically based on a standard deviation of magnitude of an image gradient vector.

$$V = \sigma_{u,v}(\|(dIu(u, v), dIv(u, v))\|) \qquad \ldots (27)$$

«g6: Other Approaches»

A template effectiveness degree may be calculated by using magnitude of contrast included in an image. Specifically, a template effectiveness degree may be calculated by using magnitude of variance/standard deviation of a luminance value.

Alternatively, a template effectiveness degree may be calculated by calculating magnitude of contrast of template candidate image 1 as shown in the Expression (28) or the Expression (29) below, instead of calculating an image gradient.

$$V = \max_{u,v}\big(I(u,v)\big) - \min_{u,v}\big(I(u,v)\big) \qquad \dots (28)$$

$$V = \sigma_{u,v}\big(I(u,v)\big) \qquad \dots (29)$$

«g9: Advantages»

According to the present embodiment, a template image having an image gradient high in extent and also diverse in direction is preferentially set, so that improvement in accuracy and stability in template matching can be expected.

[H. Fourth Embodiment]

As another processing example for calculating a template effectiveness degree based on information on an image gradient, a method of calculating a template effectiveness degree based on information on an edge in an image is available. Since stable matching processing can be expected when many edges are present in an image, a template effectiveness degree is calculated from an amount of edge in a template candidate image. Then, in the present embodiment, a configuration example in which a template effectiveness degree is calculated based on such an amount of edge will be described. Namely, in a fourth embodiment, an edge in a template candidate image is employed as a value associated with frequency distribution of a template candidate image, and a template effectiveness degree is calculated based on this amount of edge.

<<h1: Functional Configuration>>

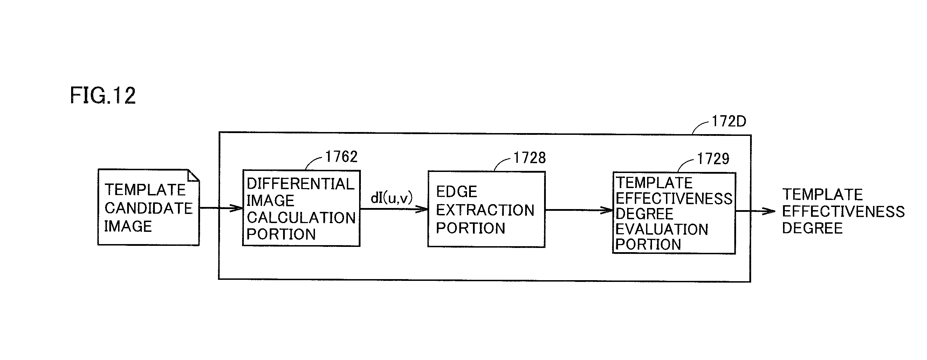

Fig. 12 is a block diagram showing a further detailed functional configuration of the template effectiveness degree calculation portion (Fig. 4) according to the fourth embodiment of the present invention. In Fig. 12, for distinction from other embodiments, the template effectiveness degree calculation portion shown in Fig. 4 will be denoted as a template effectiveness degree calculation portion 172D. Such a functional configuration is implemented as CPU 102 executes template image evaluation program 114 in image processing apparatus 100 shown in Fig. 2. Details of each functional configuration will be described below.

Referring to Fig. 12, template effectiveness degree calculation portion 172D according to the fourth embodiment includes differential image calculation portion 1726, an edge extraction portion 1728, and a template effectiveness degree evaluation portion 1729.

Differential image calculation portion 1726 calculates a differential image d1 indicating magnitude of an image gradient of a template candidate image (hereinafter also denoted as "template candidate image 1"). More specifically, differential image calculation portion 1726 calculates a differential image dl(u, v) in accordance with the Expression (30) below based on u-direction image gradient vector dlu(u, v) and v-direction image gradient dlu(u, v) at pixel position (u, v) on template candidate image 1.

$$dI(u,v) = \sqrt{dIu^2(u,v) + dIv^2(u,v)} \qquad \dots (30)$$

Edge extraction portion 1728 extracts an edge within a template candidate image based on differential image dl(u, v) calculated by differential image calculation portion 1726. Namely, edge extraction portion 1728 detects an edge within the template image candidate based on magnitude of an image gradient within the template image candidate. This processing for extracting an edge will be described later.

Template effectiveness degree evaluation portion 1729 calculates a template effectiveness degree based on an amount of edge extracted from the template candidate image by edge extraction portion 1728. Namely, template effectiveness degree evaluation portion 1729 calculates a template effectiveness degree based on the amount of detected edge. This processing for calculating a template effectiveness degree will be described later.

«h2: Extraction of Edge»

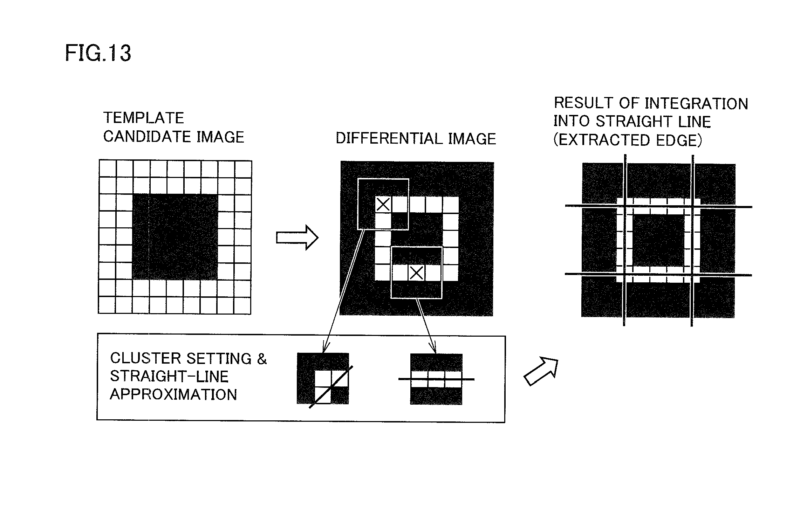

Processing for extracting an edge from within a template candidate image performed by edge extraction portion 1728 will now be described. Fig. 13 is a diagram for illustrating edge extraction processing according to the fourth embodiment of the present invention.

Initially, edge extraction portion 1728 extracts a pixel satisfying a condition of differential image $dl(u, v) \geq t$ ($t$ being a positive constant). In the example shown in Fig. 13, a solid black pixel in a template candidate image corresponds to the extracted pixel. Then, edge extraction portion 1728 defines 3 pixels adjacent to one another among the extracted pixels (a target pixel and two pixels adjacent to the target pixel) as one edge point sequence $Ei$, and subjects these pixels ($pi, qi, ri$) to straight-line approximation (for example, $pi \cdot u + qi \cdot v + ri = 0$). In addition, edge extraction portion 1728 clusters distribution of 3 pixels ($pi, qi, ri$) adjacent to one another and configures a cluster $Cj$ ($Cj = \{Ea, Eb, ...\}$) (see, for example, a differential pixel shown in Fig. 13). For example, K-means can be employed for this clustering. Finally, edge extraction portion 1728 calculates an average value of ($pi, qi, ri$) calculated for $Ei$ included in cluster $Cj$ for integration into one straight line ($Pj, Qj, Rj$).

Here, when the number of $Eis$ included in cluster $Cj$ is smaller than a prescribed number, edge extraction portion 1728 regards such a case as not being an edge point sequence forming an edge, and erases the cluster and the edge point sequence included in the cluster.

Through the processing above, successive edge portions attributed to a shape of a subject can be extracted, with influence by noise having been eliminated (see a result of integration into a straight line shown in Fig. 13). Then, an amount of extracted edge portion is quantitatively evaluated.

«h3 : Calculation of Template Effectiveness Degree»

Processing for calculating a template effectiveness degree performed by template effectiveness degree evaluation portion 1729 will now be described. Though various methods can be adopted as the approach for calculating a template effectiveness degree, two approaches will be described below as typical examples.

Initially, as a first approach, the total number of extracted pixels finally included in all clusters may be regarded as an edge length and this may be determined as a template effectiveness degree. More specifically, template effectiveness degree $V$ may be determined by calculating the total sum of the number of extracted pixels included in $Ei$ in each cluster $Cj$, that is, template effectiveness degree $V = \sum i$ (the number of extracted pixels included in $Ei$ in cluster $Cj$). In other words, a template effectiveness degree is calculated based on the total length of detected edges.

As a second approach, the number of detected straight lines after completion of processing for integration into the same straight line may be determined as a template effectiveness degree. Namely, template effectiveness degree $V$ may be determined by calculating template effectiveness degree $V$ = the final number of clusters $Cj$. In other words, a template effectiveness degree is calculated based on the number of detected edges.

«h4: Advantages»

In the present embodiment, an edge included in a template candidate image is extracted based on magnitude of an image gradient and a template effectiveness degree is calculated based on an amount of extracted edge. Namely, a template effectiveness degree is calculated from distribution of edges. In general, since a stable result of matching can be expected with presence of more edges in a template candidate image, in such a case, a value indicative of being effective as a template candidate image can be calculated.

More specifically, a total length of extracted edges is calculated as an amount of edge and a template effectiveness degree is calculated based on this total edge length. Since a stable matching processing can be expected as a ratio occupied by edges in a template candidate image is higher, a template candidate image larger in total edge length outputs a template effectiveness degree indicating a higher value.

Alternatively, the number of extracted edges is calculated as an amount of edge and a template effectiveness degree is calculated based on the number of edges. Since stable matching processing can be expected with presence of more edges in a template candidate image, a template candidate image larger in number of edges outputs a template effectiveness degree indicating a higher value.

According to the present embodiment, a template image including more edges is preferentially set and improvement in accuracy and stability in template matching can be expected.

[I. Other Embodiments]

<<i1: Processing for Weighting Template Candidate Image>>

In template matching processing, there are many cases that an image is subjected to some kind of pre-processing and then used. In some pre-processing, appearance of some images significantly varies as compared with images at the time of setting of a template image by a user. In such a case, a template image which has been set as expected to be effective by the user may not function as expected.

Then, for example, in calculation of a template effectiveness degree according to the third or fourth embodiment described above, such pre-processing is actually applied, and then a template effectiveness degree of a template candidate image is calculated so as to support setting of a template from which a more stable matching result will be obtained. A function as below can be used for such weighting processing.

(1) Weighting Processing by Applying Window Function

For example, a window function is applied to an image as pre-processing for converting an image to a frequency space in many cases. In such a case, in calculation of a template effectiveness degree, calculation is preferably carried out by using an image to which a window function has actually been applied. Such a window function includes a hanning window function, a square window function, and a Gaussian window function.

(2) Weighting Processing by Mask Processing

For example, in template matching, an object other than an expected subject such as a background may be photographed. Therefore, matching processing may be performed, with masking processing in which only a subject portion is regarded as being effective being applied to an image. In such a case, in calculation of a template effectiveness degree, a template effectiveness degree is preferably calculated by performing such mask processing that a weight for a portion which will be noise in matching processing such as a background is set to 0 and a weight for a region other than that is set to 1.

(3) Weighting Processing by Smoothing Processing

For example, noise originating from an image sensor constituting camera 4 may be superimposed on a photographed image to be subjected to template matching, which may become a factor for lowering in accuracy in template matching processing. As a method of removing such noise, an image is subjected to smoothing processing so as to lower influence by noise, and then template matching processing may be performed. In such a case, in calculation of a template effectiveness degree, a template effectiveness degree is preferably calculated after smoothing processing is applied. Smoothing processing includes an averaging filter and a median filter.

<<i2: Scaling of Template Effectiveness Degree>>

A calculated template effectiveness degree may be scaled, depending on an expected extent of fluctuation. For example, in the third embodiment described above, a minimum value for a template effectiveness degree is 0 and a maximum value therefor is the number of pixels in a template candidate image. A template effectiveness degree may be calculated, for example, by scaling such an extent of fluctuation to 0 at the minimum and to 100 at the maximum.

«i3: Template Matching Method»

In the embodiment described above, an example in which POC has been adopted as an example of template matching relying on a frequency component of an image has been described. The method according to the present embodiment, however, is applicable to any template matching relying on a frequency component of an image. Rotation invariant phase only correlation (RIPOC) or a matching method using Fourier-Mellin transform can also be employed as such a template matching method.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

1 system; 2 belt conveyor; 3 object; 4 camera; 100 image processing apparatus; 102 CPU; 104 RAM; 106 ROM; 108 network interface; 110 auxiliary storage device; 112 template matching processing program; 114 template image evaluation program; 116 image for template extraction; 120 display portion; 122 input portion; 124 memory card interface; 126 memory card; 128 camera interface; 130 bus; 150 template image; 152 photographed image; 154, 164 frequency conversion portion; 156 phase difference calculation portion; 158 phase difference information calculation portion; 160 position determination portion; 162 matching image clipping portion; 170 template candidate region setting portion; 172, 172A, 172B, 172C, 172D template effectiveness degree calculation portion; 174 template effectiveness degree display portion; 176 template image determination portion; 1721 Fourier transform portion; 1722 frequency effectiveness degree calculation portion; 1723, 1727, 1729 template effectiveness degree evaluation portion; 1724 polar coordinate effectiveness degree calculation portion; 1726 differential image calculation portion; and 1728 edge extraction portion.

## Claims

1.  An image processing apparatus for generating a template image used for template matching relying on a frequency component of an image, comprising:

    a setting portion configured to accept setting of a region in an input image as a template candidate image; and
    an effectiveness degree calculation portion configured to calculate, by analyzing the template candidate image itself set in the input image, a degree of effectiveness indicating appropriateness as the template image,
    the effectiveness degree calculation portion configured to calculate the degree of effectiveness based on a value associated with frequency distribution of the template candidate image.

2.  The image processing apparatus according to claim 1, wherein
    the effectiveness degree calculation portion includes
    a frequency conversion portion configured to subject the template candidate image to frequency conversion, and
    a frequency effectiveness degree calculation portion configured to calculate frequency effectiveness degrees of individual frequencies at an output of the frequency conversion portion, and
    the effectiveness degree calculation portion outputs a value obtained by summing the frequency effectiveness degrees of the individual frequencies calculated by the frequency effectiveness degree calculation portion, as the degree of effectiveness.

3.  The image processing apparatus according to claim 2, wherein
    the frequency effectiveness degree calculation portion calculates the frequency effectiveness degree from amplitude at each frequency included in the template candidate image.

4.  The image processing apparatus according to claim 3, wherein
    the frequency effectiveness degree calculation portion regards, when amplitude at each frequency is lower than a prescribed value, the frequency effectiveness degree for that frequency as zero.

5.  The image processing apparatus according to any one of claims 2 to 4, wherein
    the frequency effectiveness degree calculation portion regards the frequency effectiveness degree for a frequency higher than a prescribed value as zero.

6.  The image processing apparatus according to any one of claims 2 to 5, wherein
    the frequency effectiveness degree calculation portion regards the frequency effectiveness degree for a frequency lower than a prescribed value as zero.

7.  The image processing apparatus according to any one of claims 2 to 6, wherein
    the frequency effectiveness degree calculation portion regards, when a value for a DC component of a spatial frequency characteristic of a camera which has photographed the input image is defined as a reference and a value for the spatial frequency characteristic at a frequency of interest is lower than a prescribed ratio, the frequency effectiveness degree for that frequency of interest as zero.

8.  The image processing apparatus according to claim 1, wherein

the effectiveness degree calculation portion outputs the degree of effectiveness indicating a value higher as diversity in a direction of distribution of frequency components included in the template candidate image is higher.

9. The image processing apparatus according to claim 8, wherein
the effectiveness degree calculation portion includes
a frequency conversion portion configured to subject the template candidate image to frequency conversion,
a frequency effectiveness degree calculation portion configured to calculate a frequency effectiveness degree for an individual frequency at an output of the frequency conversion portion, and
a polar coordinate conversion portion configured to subject the frequency effectiveness degree calculated by the frequency effectiveness degree calculation portion to polar coordinate conversion.

10. The image processing apparatus according to claim 1, wherein
the effectiveness degree calculation portion outputs as the degree of effectiveness, the number of pixels within the template candidate image, of which magnitude of an image gradient is greater than a prescribed value.

11. The image processing apparatus according to claim 10, wherein
the effectiveness degree calculation portion corrects the degree of effectiveness based on magnitude of diversity in a direction of an image gradient vector within the template candidate image.

12. The image processing apparatus according to claim 1, wherein
the effectiveness degree calculation portion includes
an edge detection portion configured to detect an edge within the template candidate image, and
a portion configured to calculate the degree of effectiveness based on an amount of edge detected by the edge detection portion.

13. The image processing apparatus according to claim 12, wherein
the degree of effectiveness is calculated based on a total length of the detected edge.

14. The image processing apparatus according to claim 12, wherein
the degree of effectiveness is calculated based on the number of detected edges.

15. The image processing apparatus according to any one of claims 1 to 14, further comprising a display portion configured to display the degree of effectiveness calculated by the effectiveness degree calculation portion.

16. The image processing apparatus according to any one of claims 1 to 14, wherein
the setting portion sets a plurality of template candidate images different in region from one another, based on an input from a user,
the effectiveness degree calculation portion calculates the degree of effectiveness for each of the plurality of template candidate images, and
the image processing apparatus further comprises a determination portion configured to determine a template candidate image highest in degree of effectiveness as the template image.

17. An image processing method for generating a template image used for template matching relying on a frequency component of an image, comprising the steps of:

accepting setting of a region in an input image as a template candidate image; and
calculating, by analyzing the template candidate image itself set in the input image, a degree of effectiveness indicating appropriateness as the template image,
the degree of effectiveness being calculated based on a value associated with frequency distribution of the template candidate image.

18. An image processing program for generating a template image used for template matching relying on a frequency component of an image, causing a computer to perform the steps of:

accepting setting of a region in an input image as a template candidate image; and
calculating, by analyzing the template candidate image itself set in the input image, a degree of effectiveness indicating appropriateness as the template image,
the degree of effectiveness being calculated based on a value associated with frequency distribution of the

template candidate image.

FIG.1

INFORMATION
ON POSITION

FIG.2

EP 2 884 458 A1

# FIG.3

# FIG.4

# FIG.5

```
┌─────────────────────────────────┐
│  PROCESSING FOR GENERATING       │
│  TEMPLATE IMAGE                  │
└─────────────────────────────────┘
              │
              ▼                  ╱ S2
┌─────────────────────────────────┐
│ INPUT IMAGE FOR TEMPLATE         │
│ EXTRACTION BY PHOTOGRAPHING      │
│ SUBJECT TO BE DETECTED           │
└─────────────────────────────────┘
              │
              ▼                  ╱ S4
┌─────────────────────────────────┐
│ SET REGION TO BE SET AS          │
│ TEMPLATE IMAGE (TEMPLATE         │
│ CANDIDATE REGION), FOR IMAGE     │
│ FOR TEMPLATE EXTRACTION          │
└─────────────────────────────────┘
              │
              ▼                  ╱ S6
┌─────────────────────────────────┐
│ DISPLAY TEMPLATE                 │
│ EFFECTIVENESS DEGREE             │
│ CALCULATED FOR TEMPLATE          │
│ CANDIDATE IMAGE                  │
└─────────────────────────────────┘
              │
              ▼                  ╱ S8
         ╱─────────────╲
        ╱  IS CURRENTLY  ╲
       ╱  SET TEMPLATE    ╲   NO
      ╱  CANDIDATE IMAGE    ╲──────
      ╲  APPROPRIATE AS     ╱
       ╲  TEMPLATE IMAGE ? ╱
        ╲─────────────────╱
              │ YES
              ▼                  ╱ S10
┌─────────────────────────────────┐
│ OUTPUT SET TEMPLATE              │
│ CANDIDATE IMAGE AS               │
│ TEMPLATE IMAGE                   │
└─────────────────────────────────┘
              │
              ▼
         ┌─────────┐
         │   END   │
         └─────────┘
```

# FIG.6

```
    ┌─────────────────────────────┐
    │ PROCESSING FOR GENERATING   │
    │ TEMPLATE IMAGE              │
    └─────────────────────────────┘
                 │
                 ▼           ╭S12
    ┌─────────────────────────────┐
    │ ACCEPT IMAGE FOR TEMPLATE   │
    │ EXTRACTION                  │
    └─────────────────────────────┘
                 │
                 ▼           ╭S14
    ┌─────────────────────────────┐
    │ ACCEPT REGION TO BE SET AS  │
    │ TEMPLATE IMAGE (TEMPLATE    │
    │ CANDIDATE REGION)           │
    └─────────────────────────────┘
                 │
                 ▼           ╭S16
    ┌─────────────────────────────┐
    │ SET A PLURALITY OF CANDIDATES│
    │ FOR TEMPLATE IMAGE          │
    └─────────────────────────────┘
                 │
                 ▼           ╭S18
    ┌─────────────────────────────┐
    │ CALCULATE TEMPLATE          │
    │ EFFECTIVENESS DEGREE FOR EACH│
    │ OF THE PLURALITY OF SET     │
    │ CANDIDATES FOR TEMPLATE IMAGE│
    └─────────────────────────────┘
                 │
                 ▼           ╭S20
    ┌─────────────────────────────┐
    │ ADOPT CANDIDATE HIGHEST IN  │
    │ TEMPLATE EFFECTIVENESS DEGREE│
    │ AS TEMPLATE IMAGE           │
    └─────────────────────────────┘
                 │
                 ▼
            ┌─────────┐
            │   END   │
            └─────────┘
```

FIG.7

TEMPLATE CANDIDATE IMAGE → FOURIER TRANSFORM PORTION (1721) → AMPLITUDE COMPONENT IMAGE → FREQUENCY EFFECTIVENESS DEGREE CALCULATION PORTION (1722) → FREQUENCY EFFECTIVENESS DEGREE → TEMPLATE EFFECTIVENESS DEGREE EVALUATION PORTION (1723) → TEMPLATE EFFECTIVENESS DEGREE

172A

FIG.8

AMPLITUDE
COMPONENT IMAGE

# FIG.9

# FIG.10

AMPLITUDE
COMPONENT
IMAGE

CALCULATION
OF FREQUENCY
EFFECTIVENESS
DEGREE

POLAR
COORDINATE
CONVERSION

$r$

$(fx,fy)$ $\theta$
$r$

SUMMATION

$\theta$

$s(\theta)$

$n$

$\theta$

CALCULATION
OF TEMPLATE
EFFECTIVENESS
DEGREE

CALCULATION OF DEGREE
OF EFFECTIVENESS
FOR EACH ANGLE

EP 2 884 458 A1

FIG.11

```
                                                          ┌─172C
        ┌────────────────────────────────────────────────────┐
        │        ┌─1726              ┌─1727                    │
┌──────────┐     ┌──────────────┐    ┌──────────────┐
│TEMPLATE  │     │DIFFERENTIAL  │    │TEMPLATE      │
│CANDIDATE │────▶│IMAGE         │dlu,│EFFECTIVENESS │────▶ TEMPLATE
│IMAGE     │     │CALCULATION   │dlv │DEGREE        │      EFFECTIVENESS
└──────────┘     │PORTION       │───▶│EVALUATION    │      DEGREE
                 └──────────────┘    │PORTION       │
        │                           └──────────────┘        │
        └────────────────────────────────────────────────────┘
```

FIG.12

FIG.13

TEMPLATE
CANDIDATE IMAGE

DIFFERENTIAL IMAGE

RESULT OF INTEGRATION
INTO STRAIGHT LINE
(EXTRACTED EDGE)

CLUSTER SETTING &
STRAIGHT-LINE
APPROXIMATION

EP 2 884 458 A1

## INTERNATIONAL SEARCH REPORT

| International application No. |
|---|
| PCT/JP2013/069510 |

A. CLASSIFICATION OF SUBJECT MATTER
*G06T7/00*(2006.01)i

According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho   1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2007/072678 A1  (Nikon Corp.),<br>28 June 2007 (28.06.2007),<br>paragraphs [0018] to [0026]<br>& US 2009/0208115 A1    & EP 1965350 A1 | 1,10,12-18<br>2-9,11 |
| Y<br>A | JP 2009-187316 A  (Konica Minolta Holdings,<br>Inc.),<br>20 August 2009 (20.08.2009),<br>paragraphs [0068], [0069]<br>(Family: none) | 1,10,12-18<br>2-9,11 |
| Y | WO 2005/001593 A2  (Nikon Corp.),<br>06 January 2005 (06.01.2005),<br>paragraph [0115]<br>& JP 4389871 B2 | 13,14 |

☒  Further documents are listed in the continuation of Box C.        ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September, 2013 (02.09.13) | 10 September, 2013 (10.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/069510 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | JP 5-298591 A  (Hitachi, Ltd.), 12 November 1993 (12.11.1993), paragraph [0052] & US 5554983 A        & EP 567059 A1 & DE 69322306 T2 | 1-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001148014 A